# EUROPÄISCHE PATENTSCHRIFT

(11) **EP 3 746 288 B1**
(45) Veröffentlichungstag und Bekanntmachung des Hinweises auf die Patenterteilung: **18.10.2023**
(21) Anmeldenummer: 19700456.7
(22) Anmeldetag: 09.01.2019
(51) Int. Cl.: B29C 65/78, B29C 65/16, B29K 101/12

(54) **VORRICHTUNG ZUM FÜGEN, INSBESONDERE LASERSCHWEISSEN, ZWEIER BAUTEILE UND BETRIEBSVERFAHREN FÜR EINE SOLCHE FÜGEVORRICHTUNG**
APPARATUS FOR JOINING, IN PARTICULAR LASER WELDING, TWO COMPONENTS, AND OPERATING METHOD FOR SUCH A JOINING APPARATUS
DISPOSITIF D'ASSEMBLAGE, EN PARTICULIER DE SOUDAGE AU LASER, DE DEUX PIÈCES, ET PROCÉDÉ PERMETTANT DE FAIRE FONCTIONNER LEDIT DISPOSITIF

(30) Priorität: 30.01.2018 DE 102018201416
(43) Veröffentlichungstag der Anmeldung: 09.12.2020
(73) Patentinhaber: LPKF Laser & Electronics SE, 30827 Garbsen (DE)
(72) Erfinder: SCHWALME, Michael Jonathan, 90766 Fürth (DE); FITIL, Nasir, 91080 Uttenreuth (DE); JAUS, Tobias, 90455 Nürnberg (DE); SIEBEN, Manuel, 90768 Fürth-Vach (DE)
(74) Vertreter: Rau, Schneck & Hübner Patentanwälte Rechtsanwälte PartGmbB
(86) Internationale Anmeldenummer: PCT/EP2019/050371
(87) Internationale Veröffentlichungsnummer: WO 2019/149480

(56) Entgegenhaltungen:
- EP-A1- 1 306 196
- DE-A1-102014 212 837

## Beschreibung

Die Erfindung betrifft eine Vorrichtung zum Fügen, insbesondere zum Laserschweißen, zweier Bauteile gemäß dem Oberbegriff des Patentanspruchs 1, wie sie aus der EP 1 306 196 A1 bekannt ist, sowie ein Betriebsverfahren für eine solche Fügevorrichtung. Bei einer sehr ähnlichen Vorrichtung, wie sie in der DE 10 2014 212 837 A1 offenbart ist, ist keine mechanisch lose Kopplung zwischen Spannantrieb und Lagerelement vorgesehen.

Bei herkömmlichen Fügevorrichtungen, wie sie beispielsweise in der DE 199 24 469 A1 offenbart sind, sind zwei Werkstückaufnahmen zur jeweiligen Halterung der beiden zu verbindenden Bauteile vorgesehen. Jede dieser Werkstückaufnahmen sitzt auf einer entsprechenden Lagerplatte, von denen eine durch einen entsprechenden linearen Spannantrieb zum Zustellen und Verspannen der beiden zu fügenden Bauteile während des Fügeprozesses beaufschlagt ist. Eine nicht explizit offenbarte Steuerung steuert bei dieser Laserschweißanlage den Spannantrieb und die Lasereinrichtung. Die Besonderheit dieser Fügevorrichtung liegt darin, dass unebene Werkstücke durch eine nachgiebige Spannfläche gespannt werden, wodurch ein gewisser Toleranzausgleich stattfinden kann.

In der EP 2 566 684 B1 sind eine Vorrichtung zum lasertransparenten Schweißen zweier Bauteile und ein entsprechendes Montageverfahren offenbart, wobei zwei unterschiedliche Klemmmittel mit mehreren beweglichen Organen vorgesehen sind. Die einen Klemmmittel sind dazu bestimmt, die geometrische Referenzierung der beiden Teile auf einem Träger zu gewährleisten, während die zweiten Klemmmittel in ihrer Kraft regelbar zum Verspannen der beiden Bauteile ist.

Aus der EP 3 205 481 A1 ist ein Verfahren und eine Vorrichtung zur Verbindung einer Lichtscheibe und eines Leuchtengehäuses einer Fahrzeugleuchte mittels Laserschweißens bekannt, bei der das Leuchtengehäuse in einer Werkzeugaufnahme an einem ortsfesten Nullpunkt fest und an wenigsten einen davon entfernten Aufnahmepunkt schwimmend gelagert gehalten ist. Die mehrteilige Werkzeugaufnahme ist damit sehr komplex konstruiert.

Bei den vorstehenden bekannten Vorrichtungen und Montageverfahren sind die entsprechenden Komponenten zwar dazu bestimmt, gewisse Geometrieabweichungen auszugleichen und auch Bauteile mit komplexeren Geometrien ausreichend zuverlässig spannen zu können. Dies wird allerdings mit teilweise sehr komplexen Konstruktionen erreicht, die relativ aufwendig in die Praxis umsetzbar sind.

Beim Fügen von Bauteilen und insbesondere beim Laserschweißen besteht grundsätzlich das Bedürfnis, relevante Toleranzen, wie sie aus den Bauteilen selbst, deren Positionierung bei der gegenseitigen Anlage und innerhalb der Fügeanlage herrühren, möglichst optimal zu kompensieren. Bei herkömmliche Anlagen und Verfahren, bei denen in der Regel ein einziger, mittig angelegter Antrieb für die Zustellbewegungen der Werkzeugaufspannung eingesetzt wird, kann zwar die Spannkraft während des Schweißvorgangs variiert werden, wie beispielsweise beim Vibrationsschweißen, weitergehende Konzepte zum Toleranzausgleich sind jedoch bislang nicht realisiert. Insbesondere kann kein Einfluss auf die Maßhaltigkeit des verschweißten Gesamtbauteils genommen werden, da die vom Spannantrieb beaufschlagte Werkstückaufnahme immer parallel zur anderen Werkstückaufnahme verfahren wird.

Die Erfindung löst die vorstehend erörterte Problematik in vorrichtungstechnischer Hinsicht durch die im Anspruch 1 angegebenen Merkmale sowie in verfahrenstechnischer Hinsicht durch die im Anspruch 4 enthaltenen Verfahrensschritte.

Der vorrichtungstechnische Grundgedanke sieht demnach eine mechanisch lose Kopplung zwischen Spannantrieb und Lagerelement für die Werkstückaufnahme derart vor, dass die beiden Werkstückaufnahmen während der Zustellung und Verspannung zueinander verkippbar sind. Dabei weist der Spannantrieb eine Mehrzahl von parallel in Zustellrichtung angeordneten und wirkenden Linear-Antriebselementen, insbesondere Linear-Servoantrieben, auf, auf denen das als Lagerplatte ausgebildete Lagerelement der einen Werkstückaufnahme schwimmend gelagert ist. Diese Linear-Antriebselemente weisen eine Positionserfassung und/oder Antriebskraft-Detektion auf. Dies ermöglicht eine entsprechende Ansteuerung der Antriebselemente, sodass eine systematische Verkippung der die eine Werkstückaufnahme tragenden Lagerplatte und eine zielgenaue, individuelle Steuerung der Zustellbewegung der einzelnen Antriebselemente für einen optimalen Toleranzausgleich realisiert werden kann
Durch den zusätzlichen Freiheitsgrad bei der Bauteilhalterung aufgrund der mechanisch losen Kopplung zwischen Spannantrieb und Lagerelement für die Werkstückaufnahme besteht die Möglichkeit einer verbesserten Positionseinstellung der beiden Bauteile für deren Fügen, was die Maßhaltigkeit verbessert und entsprechend die Ausschussraten unter Erzielung eines signifikanten Kostenvorteils verringert. Zudem kann durch diesen zusätzlichen Toleranzausgleich ein größeres Prozessfenster beim Schweißen realisiert werden, was ebenfalls die Ausschussraten reduziert.

Bevorzugterweise ist die Kopplung zwischen dem Spannantrieb und dem Lagerelement für die Werkstückaufnahme eine schwimmende Lagerung, die beispielsweise dadurch besonders einfach realisierbar ist, wenn der Spannantrieb mit seinen einzelnen Antriebselementen von unten vertikal nach oben auf das Lagerelement zugreift und letzteres im wesentlichen lose - z.B. über entsprechende kalottenförmige Lagerpfannen - auf den Antriebselementen aufliegt.

Es können beispielsweise 4 oder 8 einzeln ansteuerbare Servoantriebe zum Einsatz kommen, auf der die Lagerplatte mit der unteren Werkstückaufnahme schwimmend gelagert ist.

Die Erfindung bezieht sich auch auf ein Verfahren zum Betrieb einer solchen Fügevorrichtung und umfasst folgende Verfahrensschritte:
- Zustellen mindestens eines der Lagerelemente mithilfe der Linear-Antriebselemente bis zum Kontakt der beiden zu fügenden Bauteile gemäß einem vordefinierten System-Sollwert, insbesondere Spannkraft-Sollwert mindestens eines der Linear-Antriebselemente, wobei die Werkstückaufnahmen sich in eine entsprechende Position zueinander einstellen,
- Festlegung der Kontaktposition als Referenzposition,
- während des Fügeprozesses, insbesondere Schweißprozesses, weitere Ansteuerung der Linear-Antriebselemente ausgehend von der Referenzposition gemäß mindestens einem vordefinierten Systemparameter, insbesondere gemäß einer vordefinierten Spannkraft und/oder einem vordefinierten Fügeweg der Linear-Antriebselemente, bis zum Erreichen eines Zielkriteriums, für den Systemparameter, und
- Beendigung des Fügeprozesses nach Erreichen des Zielkriteriums.

Diese steuerungstechnischen Maßnahmen nutzen die erfindungsgemäße Vorrichtung aus, um die umfassend erörterten Vorteile zu erzielen, die an dieser Stelle nicht wiederholt werden müssen.

Bevorzugte Weiterbildungen des erfindungsgemäßen Verfahrens sehen verschiedene System-Sollwerte als Steuerungsparameter vor, wie beispielsweise zur Festlegung der Referenzposition des die Zustellbewegung vollführenden Lagerelements vordefinierte Spannkraft-Sollwerte der Antriebselemente, die gleich sein, aber auch auf unterschiedliche Sollwerte - gegebenenfalls auch in Gruppen von Antriebselementen gebündelt - festgelegt werden können.

Während des Fügeprozesses, bei dem eine Zustellung des Lagerelementes mit der beweglichen Werkstückaufspannung in Richtung der festen Werkstückaufspannung stattfindet, können verschiedene Steuerroutinen gesondert oder abgestimmt aufeinander angewendet werden, zu deren besseren Verständnis auf die Beschreibung der entsprechenden Ausführungsbeispiele verwiesen wird.

Kurz umrissen können die Linear-Antriebselemente durch die Steuerung beispielsweise individuell auf eine vordefinierte Spannkraft geregelt werden. Diese vordefinierte Spannkraft der einzelnen Linear-Antriebselemente kann dann ferner derart eingestellt werden, dass alle Linear-Antriebselemente zeitgleich ein für sie geltendes, individuelles Abschaltkriterium, also beispielsweise einen bestimmten Setz- oder Fügeweg, erreichen. Hat also ein Spannantrieb aufgrund der festgestellten Maßtoleranzen einen höheren Fügeweg zu durchlaufen als ein anderer Spannantrieb, so arbeiten diese beiden Spannantriebe dann mit so unterschiedlichen Spannkräften, dass sie die unterschiedlichen Fügewege in gleicher Zeit durchlaufen.

Alternativ zu den vorstehenden Regelstrategien kann nach Art einer Master-Slave-Steuerung auch während des Fügeprozesses das die höchste Spannkraft applizierende Linear-Antriebselement mit seinem Zustell- oder Fügeweg den Fügeweg der weiteren Linear-Antriebselemente direkt oder über eine Soll-Variation als Führungsgröße vorgeben.

Eine weitere Möglichkeit zur Ansteuerung der Linear-Antriebselemente kann darin bestehen, ausgehend von der Referenzposition die in der Steuerung verfügbaren Formdaten des aus den zu fügenden Bauteilen herzustellenden Gegenstandes in die Zustellbewegung der Werkstückaufnahme einfließen zu lassen. Damit ist es dann möglich, die Spannantriebe aus einer Ausgangsstellung auf ihre jeweilige Referenzpositionen zu fahren, von denen ausgehend der von jedem Stellantrieb zum durchlaufende Fügeweg durch Differenzbildung zum Soll-Endmaß des Werkstücks von der Steuerung zu ermitteln und die jeweiligen Spannkräfte der Stellantriebe dann entsprechend einer gewünschten Regelstrategie - zum Beispiel, wie oben erläutert, dass die Fügewege der einzelnen Stellantriebe in gleicher Zeit durchlaufen werden - eingestellt werden.

Weitere bevorzugte Ausführungsformen des erfindungsgemäßen Verfahrens beziehen sich auf das Zielkriterium für die Beendigung der Zustellung der Bauteile durch die Linear-Antriebselemente. So kann hierfür das Erreichen eines vordefinierten Zustellweges oder einer definierten, gegenüber der Spannkraft während des Zustellvorganges höheren Grenzkraft herangezogen werden. Letzteres stellt quasi eine Zustellung der Werkstückaufnahme "auf Anschlag" an die feste Werkstückaufnahme dar.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine schematische Perspektivdarstellung einer Laserschweißanlage,
- Fig. 2: eine höchst schematische, ausschnittsweise Schnittdarstellung der Laserschweißanlage,
- Fig. 3: ein Ablaufdiagramm für einen auf dieser Laserschweißanlage durchgeführten Schweißprozess,
- Fig. 4: ein Schaubild der Spannkräfte der einzelnen LinearAntriebselemente der Laserschweißanlage,
- Fig. 5: ein Zeit-Zustellweg-Diagramm dieser Linear-Antriebselemente,
- Fig. 6 und 7: Darstellungen analog Fig. 4 und 5 mit voneinander abweichenden Spannkräfte der Linear-Antriebselemente, sowie
- Fig. 8 und 9: Zeit-Zustellweg-Diagramme für weitere alternative Ansteuerungen der Lineal-Antriebselemente.

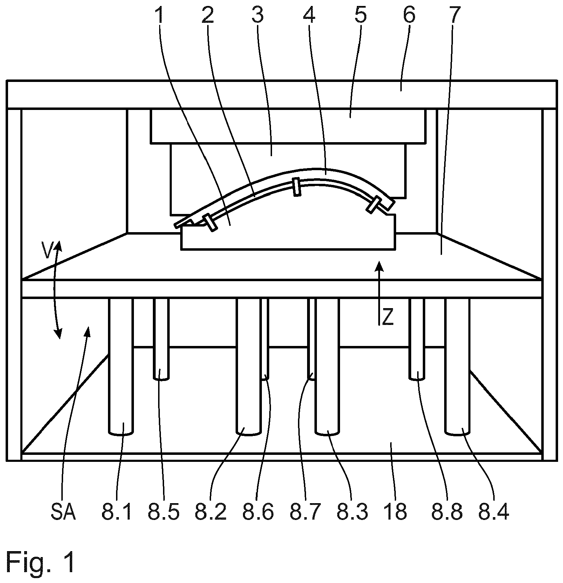

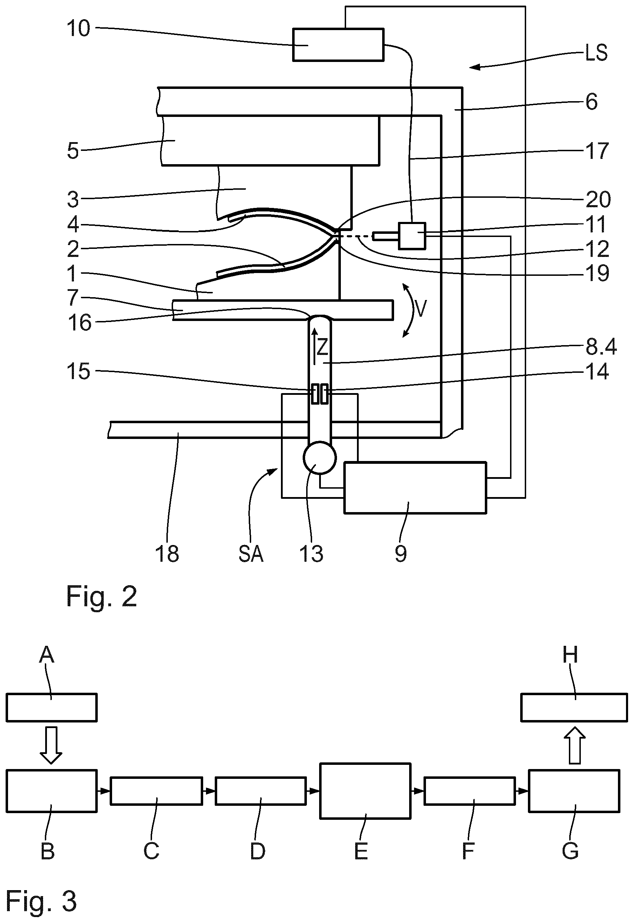

Wie aus Fig. 1 und 2 deutlich wird, ist eine beispielhafte Vorrichtung zum Fügen als Laserschweißanlage ausgebildet, bei der eine untere Werkstückaufnahme 1 ein erstes Bauteil 2, beispielsweise ein Leuchtengehäuse einer Kfz-Rückleuchte, und eine obere Werkstückaufnahme 3 ein zweites Bauteil 4, beispielsweise die das Leuchtengehäuse abdeckende Lichtscheibe der Rückleuchte, für den Schweißprozess aufnimmt. Die obere Werkstückaufnahme 3 ist über einen Sockel 5 an einer stationären Brücke 6 ortsfest positioniert, wobei das zweite Bauteil 4 beispielsweise durch VakuumBeaufschlagung in der Werkstückaufnahme 3 fixiert ist.

Die untere Werkstückaufnahme 1 ist auf einem Lagerelement in Form einer im Wesentlichen horizontal angeordneten Lagerplatte 7 angeordnet, die durch einen als Ganzes mit SA bezeichneten Spannantrieb in vertikaler Zustellrichtung Z zur Realisierung der Zustellung des zweiten Bauteils 4 zum ersten Bauteil 2 hin und der Verspannung dieser beiden Bauteile 2, 4 angetrieben beweglich ist. Der Spannantrieb SA besteht aus acht vertikal gerichteten Linear-Antriebselementen in Form von Linear-Servoantrieben 8.1 bis 8.8, die in zwei im Rechteck angeordneten Vierergruppen in einer Grundplatte 18 positioniert sind.

Wie aus Figur 2 hervorgeht, weist die Laserschweißanlage eine zentrale Steuerung 9 auf, die neben den Spannantrieb SA auch eine schematisch angedeutete Laserschweißeinrichtung LS mit Laserquelle 10, einer Abbildungsoptik 11 sowie einem Lichtleitkabel 17 dazwischen für den die Verschweißung der beiden Bauteile 2, 4 bewirkenden Laserstrahl 12 steuert.

Die Linear-Servoantriebe 8.1 bis 8.8 - von denen in Figur 2 nur der eine Linear-Servoantrieb 8.4 gezeigt ist - sind mit ihren Spindelmotoren 13 jeweils mit der Steuerung 9 verbunden. Ferner weisen die Linear-Servoantriebe jeweils einen Detektor 14 zur Erfassung der VorschubPosition sowie einen Detektor 15 zur Erfassung der Spannkraft des jeweiligen Linear-Servoantriebs 8.1 bis 8.8 auf. Diese Detektoren 14, 15 liefern ihre erfassten Werte an die Steuerung 9.

Wie in Fig. 2 ferner schematisch angedeutet ist, liegt die Lagerplatte 7 auf den Rund-Köpfen der Servoantriebe 8.1 bis 8.8 lose über eine kalottenförmige Vertiefung 16 auf, sodass sich insgesamt eine schwimmende Lagerung der Lagerplatte 7 auf den Linear-Servoantrieben 8.1 bis 8.8 ergibt, die ein durch den Pfeil V angedeutetes Verkippen der Lagerplatte 7 und damit der Werkstückaufnahmen 1, 3 relativ zueinander erlaubt.

Anhand von Fig. 3 soll nun der grundsätzliche Verfahrensablauf des Spann- und Schweißvorgangs erläutert werden. In den Zeichnungen nicht dargestellt ist, dass der Spannantrieb SA zunächst nach unten gefahren wird. Somit ist die Anlage geöffnet und die Bauteile 2, 4 werden in die untere Werkstückaufnahme 1 eingelegt - Schritt A.

Danach aktiviert die Steuerung 9 den Spannantrieb SA und fährt die Linear-Servoantriebe 8.1 bis 8.8 gleichmäßig nach oben. Damit werden die Bauteilen 2, 4 in Arbeitsstellung gebracht - Schritt B.

Am Ende dieses Schritts B erfolgt die Bestimmung einer Referenzposition - Schritt C - indem die untere Werkstückaufnahme 1 mit den beiden Bauteilen 2, 4 gegen die obere Werkstückaufnahme 3 auf Kontakt zugestellt wird. Die dabei aufgewendete Spannkraft wird für jeden Spannantrieb durch den jeweiligen Spannkraft-Detektor 15 erfasst und von der Steuerung 9 mit einem vordefinierten System-Sollwert, beispielsweise 2 kN, verglichen. Sobald dieser Wert erreicht ist, wird die Position des entsprechenden Linear-Servoantriebs 8.1 bis 8.8 genullt und diese Kontaktposition als Referenzposition für die Messung des weiteren Setzweges zwischen den beiden Werkstückaufnahmen 1, 3 und dementsprechend den beiden Bauteilen 2, 4 beim Laserschweißen festgelegt.

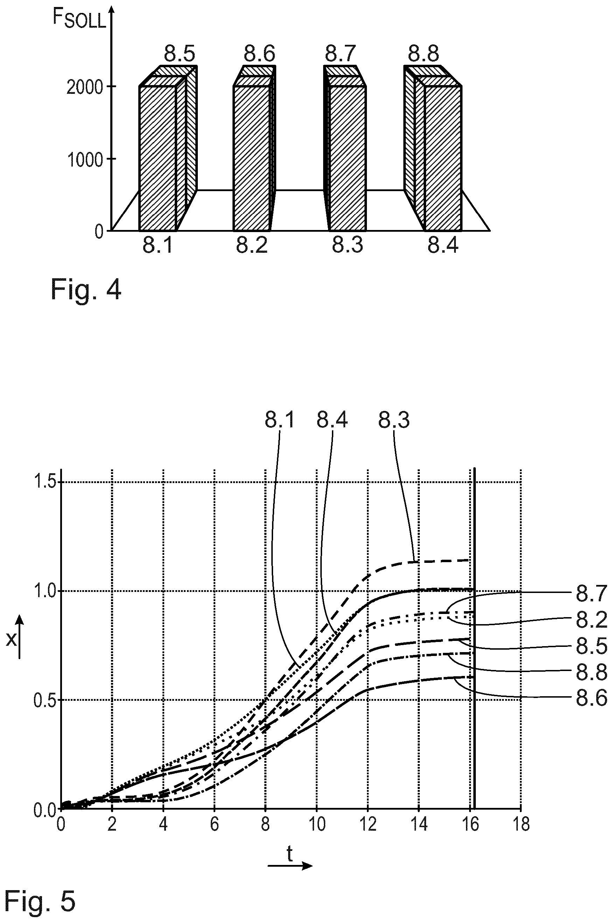

Danach erfolgt der Schweißvorgang - Schritt D -, bei dem die beiden Bauteile 2, 4 im Bereich ihrer Schweißflansche 19, 20 miteinander durch Beaufschlagung durch den Laserstrahl 12 in üblicher Weise verschweißt werden. Wie später noch anhand der Fig. 4 bis 9 näher erläutert wird, kann dabei mit verschiedenen Regelstrategien gearbeitet werden, bis ein entsprechendes Zielkriterium erreicht und damit der Schweißprozess durch Abschalten des Laserstrahls 12 beendet wird - Schritt E.

Danach wird das so aus den beiden Bauteilen 2, 4 gefügte Werkstück noch definiert unter Druck gehalten, bis der Kunststoff insbesondere im Bereich der aufgeschmolzenen Schweißnaht abgekühlt und eine dauerhafte Verbindung zwischen den beiden Bauteilen 2, 4 hergestellt ist - Schritt F.

Zur Entnahme des Werkstücks wird mithilfe des Spannantriebes SA die Lagerplatte 7 mit der Werkstückaufnahme 1 und dem kompletten Werkstück nach unten in die Grundstellung gefahren - Schritt G - und das Werkstück kann entnommen werden - Schritt H.

Im Folgenden werden nun die bereits angesprochenen Regelstrategien näher erörtert. So zeigt Fig. 4 die Einstellung der Spannkraft-Sollwerte F_{SOLL} der acht Linear-Servoantriebe 8.1 bis 8.8 auf einen gemeinsamen, gleichen Wert von 2 kN. Jeder Linear-Servoantrieb wird dabei in den Schritten B und C so angesteuert, bis über seinen Spannkraft-Detektor 15 das Erreichen dieses Sollwerts erfasst wird. In der Praxis bedeutet dies, dass bei Toleranzen beispielsweise im Bereich der Grenzflächen zwischen den beiden Bauteilen 2, 4 die Linear-Servoantriebe 8.1 bis 8.8 ihren Nullpunkt individuell finden und entsprechend in leicht unterschiedliche Höhenpositionen als jeweilige Referenzposition gefahren werden.

Ausgehend von dieser Stellung können in einer ersten Alternative beim Schweißprozess - Schritt D - die Linear-Servoantriebe 8.1 bis 8.8 beim weiteren Vorschub mit einer vordefinierten Spannkraft von beispielsweise 2 kN individuell angesteuert werden. Damit ergibt sich zwar ein sehr homogener Kraftverlauf beim Schweißprozess, wie aus Figur 5 deutlich wird, kann jedoch der dabei erzielte Zustellweg x (= Setzweg der Bauteile 2, 4 zueinander) aufgrund des Schmelzprozesses zwischen den beiden Bauteilen 2, 4 von Antrieb zu Antrieb stark schwanken. Als Abschaltkriterium für die Beendigung des Schweißvorgangs kann beispielsweise das Erreichen eines Soll-Setzweges aller Antriebe von 0,5 mm definiert werden.

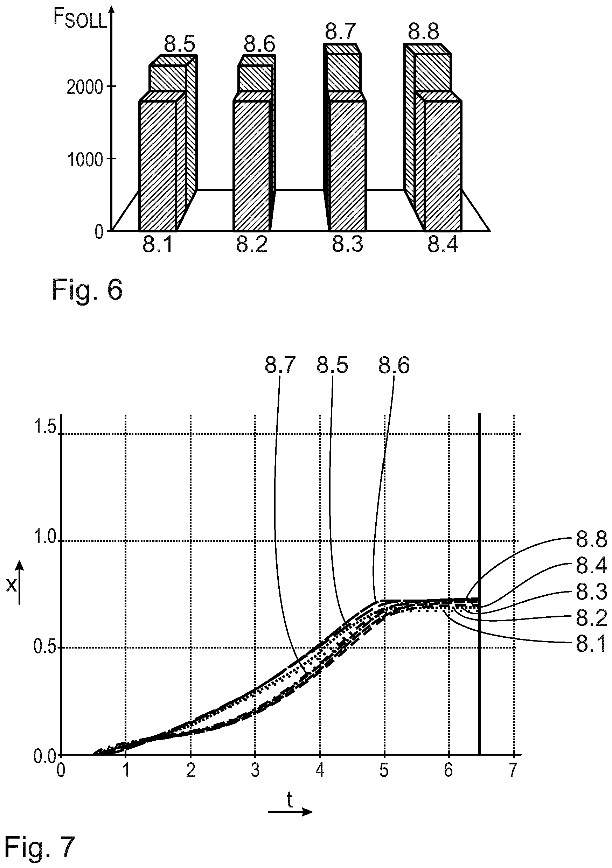

Bei der in den Fig. 6 und 7 gezeigten Alternative für die Steuerung des Schweißprozesses werden für den Schritt C für die unterschiedlichen Linearstellantriebe 8.1 bis 8.8 unterschiedliche Spannkraft-Sollwerte F_{SOLL} vordefiniert. So sind für die Linearantriebe 8.1 bis 8.4 übereinstimmende Werte von 1,8 kN definiert, während die in der hinteren Reihe angeordneten Linearantriebe 8.5 bis 8.8 mit ca. 2,3 kN bzw. 2,5 kN beaufschlagt werden, um die Referenzposition festzulegen. Damit können diese Ausgangspositionen der einzelnen Linear-Servoantriebe sogar noch deutlicher voneinander abweichen, als beim vorherigen Ausführungsbeispiel. Wie jedoch aus Fig. 7 deutlich wird, wird beim folgenden Abschweißen unter Regelung der Linear-Servoantriebe 8.1 bis 8.8 auf eine definierte Soll-Spannkraft ein erheblich homogenerer Verlauf des Zustellweges x erzielt. Dies verbessert die Maßhaltigkeit des aus den Bauteilen 2, 4 hergestellten Werkstücks deutlich.

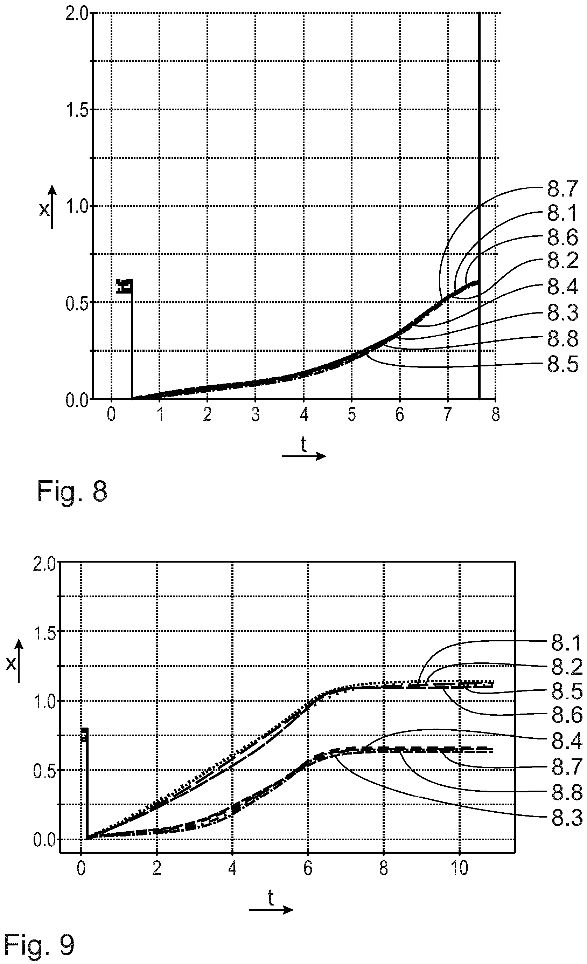

Bei der anhand von Fig. 8 zu erläuternden Regelstrategie für den Schweißprozess wird analog den vorherigen Verfahrensweisen wieder davon ausgegangen, dass der Nullpunkt der einzelnen Linear-Servoantriebe und dementsprechend die Referenzposition für den Schweißvorgang wieder über das Erreichen einer definierten Soll-Spannkraft eingestellt wird. Dann werden aber für den Schweißprozess die Linear-Servoantriebe steuerungstechnisch gekoppelt, sodass der Antrieb, bei dem die höchste Gegenkraft mithilfe des Spannkraftdetektors 15 ermittelt wird, als Führungsachse herangezogen wird, die den Zustellweg x für alle Linear-Servoantriebe 8.1 bis 8.8 vorgibt. Dementsprechend sind in Fig. 8 deren Zustellwege innerhalb der Anlagentoleranzen übereinstimmend. Naturgemäß ist der Zustellvorgang und damit der erzielte Setzweg sehr homogen, was der Maßhaltigkeit des Werkstücks wieder zugutekommt. Allerdings ergeben sich dadurch schwankende Spannkräfte während des Schweißprozesses. Als Abschaltkriterium für den Schweißvorgang wird wieder das Erreichen eines Soll-Zustellweges von beispielsweise 0,5 mm festgelegt.

Anhand von Fig. 9 ist eine Abwandlung der Regelungsstrategie gemäß Figur 8 zu erläutern. Hier dient zwar wieder der die höchste Spannkraft aufbringende Linear-Servoantrieb als Führungsachse, dieser gibt jedoch nur für eine Gruppe von Linear-Servoantrieben einen übereinstimmenden Setz- bzw. Zustellweg vor (unterer Graph in Fig. 9). Eine zweite Gruppe von Linear-Servoantrieben wird so gesteuert, dass diese einen deutlich höheren Zustellweg durchlaufen (oberer Graph in Fig. 9). Damit können Toleranzen noch besser ausgeglichen werden. Insbesondere kann die Maßhaltigkeit des Gesamtbauteils auch bei maßlichen Abweichungen der einzelnen Bauteile 2, 4 sichergestellt werden. Das Abschaltkriterium in diesem Fall kann das Erreichen eines individuellen Soll-Setzweges sein.

Abschließend sind noch zeichnerisch nicht dargestellte Varianten für Regelstrategien beim Schweißen zu ergänzen, bei denen wiederum die Referenzposition wie bei den vorstehenden Ausführungsbeispielen definiert wird.

In einer Variante kann die Maßhaltigkeit der einzelnen Bauteile durch eine individuelle Setzwegeinstellung gewährleistet werden, wobei die Ist-Abmessung des Bauteils über die Bestimmung der Referenzpositionen ermittelt und die Soll-Abmessung aus den CAD-Daten des Bauteils bekannt ist. Durch einen Vergleich von Ist- und Soll-Abmessung kann ein lokal benötigter Zustellweg von der Steuerung 9 berechnet und über eine entsprechende Ansteuerung der einzelnen Linear-Servoantriebe 8.1 bis 8.8 individuell realisiert werden. Auswahlkriterien können auch hier wieder sein, dass jeder Linear-Servoantrieb seinen individuellen Soll-Setzweg erreicht hat, wobei die ihre Vorschubgeschwindigkeit bestimmende Spannkraft der einzelnen Linear-Servoantriebe 8.1 bis 8.8 entsprechend dem Soll-Setzweg der einzelnen Antriebe so eingestellt werden kann, dass die Soll-Setzwege in gleicher Zeit durchfahren werden und somit das Abschmelzen der Bauteile 2, 4 an allen Punkten der Schweißnaht zeitgleich endet.

In einer weiteren Variante kann nach Art eines Anschlagschweißens gearbeitet werden, indem jeder Linear-Servoantrieb individuell kraftgeregelt wird. Wird eine vordefinierte Soll-Spannkraft mithilfe des jeweiligen Spannkraft-Detektors 15 an einem jeweiligen Linear-Servoantrieb als überschritten gemessen, so wird daraus gefolgert, dass im Bereich dieses Linear-Servoantriebs die Werkstückaufnahmen 1, 3 mit den Bauteilen 2, 4 "auf Block" gefahren sind, sodass der Linear-Servoantrieb abgeschaltet wird.

## Patentansprüche

1. Vorrichtung zum Fügen, insbesondere Laserschweißen, zweier Bauteile, insbesondere Kunststoffbauteile, umfassend
- zwei Werkstückaufnahmen (1, 3) zur jeweiligen Halterung der beiden zu verbindenden Bauteile (2, 4),
- jeweils ein Lagerelement, vorzugsweise Lagerplatte (7), für jede der Werkstückaufnahmen (1, 3),
- einen Spannantrieb (SA) für mindestens ein Lagerelement zur Zustellung und Verspannung der beiden in den Werkstückaufnahmen (1, 3) gehaltenen Bauteile (2, 4) während des Fügeprozesses,
- eine Steuerung (9) für den Spannantrieb (SA) und insbesondere eine Laserschweißeinrichtung (LS), sowie
- eine mechanisch lose Kopplung zwischen Spannantrieb (SA) und Lagerelement (7) derart, dass die beiden Werkstückaufnahmen (1, 3) während der Zustellung und Verspannung zueinander verkippbar sind,
wobei der Spannantrieb (SA) eine Mehrzahl von parallel in Zustellrichtung (Z) angeordneten und wirkenden Linear-Antriebselementen, insbesondere Linear-Servoantrieben (8.1 - 8.8), aufweist, auf denen das als Lagerplatte (7) ausgebildete Lagerelement der einen Werkstückaufnahme (1, 3) schwimmend gelagert ist,
**dadurch gekennzeichnet, dass** die Linear-Antriebselemente (8.1 - 8.8) eine Positionserfassung und/oder Antriebskraft-Detektion aufweisen.

2. Vorrichtung nach Anspruch 1, **dadurch gekennzeichnet, dass** die Kopplung zwischen Spannantrieb (SA) und Lagerelement (7) eine schwimmende Lagerung ist.

3. Vorrichtung nach Anspruch 1 oder 2, **dadurch gekennzeichnet, dass** die Linear-Antriebselemente (8.1 - 8.8) entsprechend der von der Positionserfassung und/oder Antriebskraft-Detektion erfassten Werte von der Steuerung (9) individuell ansteuerbar sind.

4. Verfahren zum Betrieb einer Fügevorrichtung gemäß einem der Ansprüche 1 bis 3 bei einem Fügeprozess zweier in den Werkstückaufnahmen (1, 3) gehaltener Bauteile (2, 4), insbesondere bei einem Laserschweißprozess, umfassend folgende Verfahrensschritte:
- Zustellen mindestens eines der Lagerelemente (7) mithilfe der Linear-Antriebselemente (8.1 - 8.8) bis zum Kontakt der beiden zu fügenden Bauteile (2, 4) gemäß einem vordefinierten System-Sollwert, insbesondere Spannkraft-Sollwert (F_{SOLL}) mindestens eines der Linear-Antriebselemente (8.1 - 8.8), wobei die Werkstückaufnahmen (1, 3) sich in eine entsprechende Position zueinander einstellen,
- Festlegung der Kontaktposition als Referenzposition,
- während des Fügeprozesses, insbesondere Schweißprozesses, weitere Ansteuerung der Linear-Antriebselemente (8.1 - 8.8) ausgehend von der Referenzposition gemäß mindestens einem vordefinierten Systemparameter, insbesondere gemäß einer vordefinierten Spannkraft und/oder einem vordefinierten Fügeweg der Linear-Antriebselemente (8.1 - 8.8), bis zum Erreichen eines Zielkriteriums für den Systemparameter, und
- Beendigung des Fügeprozesses nach Erreichen des Zielkriteriums.

5. Verfahren nach Anspruch 4, **dadurch gekennzeichnet, dass** für jedes Linear-Antriebselement (8.1 - 8.8) gleiche oder unterschiedliche vordefinierte Spannkraft-Sollwerte (F_{SOLL}) als System-Sollwert zur Festlegung der Referenzposition verwendet werden.

6. Verfahren nach Anspruch 4 oder 5, **dadurch gekennzeichnet, dass** die Linear-Antriebselemente (8.1 - 8.8) durch die Steuerung (9) während des Fügeprozesses individuell auf eine vordefinierte Spannkraft geregelt werden.

7. Verfahren nach Anspruch 6, **dadurch gekennzeichnet, dass** die vordefinierte Spannkraft der einzelnen Linear-Antriebselemente derart eingestellt wird, dass alle Linear-Antriebselemente zeitgleich ein für sie geltendes, individuelles Abschaltkriterium erreichen.

8. Verfahren nach einem der Ansprüche 4 bis 6, **dadurch gekennzeichnet, dass** während des Fügeprozesses das die höchste Spannkraft applizierende Linear-Antriebselement (8.1 - 8.8) mit seinem Fügeweg den Fügeweg der weiteren Linear-Antriebselemente (8.1 - 8.8) direkt oder über eine Soll-Variation als Führungsgröße vorgibt.

9. Verfahren nach einem der Ansprüche 4 bis 8, **dadurch gekennzeichnet, dass** während des Fügeprozesses die Ansteuerung der Linear-Antriebselemente (8.1 - 8.8) ausgehend von der Referenzposition entsprechend den in der Steuerung (9) verfügbaren Formdaten des aus den zu fügenden Bauteilen (2, 4) herzustellenden Gegenstandes erfolgt.

10. Verfahren nach einem der Ansprüche 4 bis 9, **dadurch gekennzeichnet, dass** das Zielkriterium für die Beendigung der Zustellung der Bauteile (2, 4) durch die Linear-Antriebselemente (8.1 - 8.8) das Erreichen eines vordefinierten Zustellweges ist.

11. Verfahren nach einem der Ansprüche 4 bis 9, **dadurch gekennzeichnet, dass** das Zielkriterium für die Beendigung der Zustellung der Bauteile (2, 4) durch die Linear-Antriebselemente (8.1 - 8.8) das Erreichen einer definierten, gegenüber der Spannkraft während des Zustellvorganges höheren Grenzkraft ist.

## Claims

1. An apparatus for joining, in particular laser welding, two components, in particular plastic components, comprising
- two workpiece holders (1, 3) for respectively holding the two components (2, 4) to be connected,
- respectively a bearing element, preferably a bearing plate (7), for each of the workpiece holders (1, 3),
- a clamping drive (SA) for at least one bearing element for feeding and bracing the two components (2, 4) held in the workpiece holders (1, 3) during the joining process,
- a controller (9) for the clamping drive (SA) and in particular a laser welding device (LS), and
- a mechanically loose coupling between the clamping drive (SA) and the bearing element (7), such that the two workpiece holders (1, 3) can be tilted with respect to one another during the feeding and bracing,
wherein the clamping drive (SA) comprises a plurality of linear drive elements arranged and acting parallel in the feed direction (Z), in particular linear servo drives (8.1 - 8.8), on which the bearing element, configured as a bearing plate (7), of one workpiece holder (1, 3) is mounted in a floating fashion,
**characterized in that** the linear drive elements (8.1 - 8.8) comprise position acquisition and/or drive force detection.

2. The apparatus as claimed in claim 1, **characterized in that** the coupling between the clamping drive (SA) and the bearing element (7) is a floating bearing.

3. The apparatus as claimed in claim 1 or 2, **characterized in that** the linear drive elements (8.1 - 8.8) can be driven individually by the controller (9) according to the values recorded by the position acquisition and/or the drive force detection.

4. A method for operating a joining apparatus as claimed in one of claims 1 to 3 during a process of joining two components (2, 4) held in the workpiece holders (1, 3), in particular during a laser welding process, comprising the following method steps:
- feeding at least one of the bearing elements (7) with the aid of the linear drive elements (8.1 - 8.8) until contact of the two components (2, 4) to be joined, according to a predefined system setpoint value, in particular a clamping force setpoint value (F_{SETPOINT}) of at least one of the linear drive elements (8.1 - 8.8), whereby the workpiece holders (1, 3) are adjusted into a corresponding position with respect to one another,
- establishing the contact position as a reference position,
- during the joining process, in particular welding process, further driving of the linear drive elements (8.1 - 8.8) starting from the reference position according to at least one predefined system parameter, in particular according to a predefined clamping force and/or a predefined joining displacement of the linear drive elements (8.1 - 8.8), until reaching a target criterion for the system parameter, and
- ending the joining process after reaching the target criterion.

5. The method as claimed in claim 4, **characterized in that** for each linear drive element (8.1 - 8.8), the same or different predefined clamping force setpoint values (F_{SETPOINT}) are used as a system setpoint value for establishing the reference position.

6. The method as claimed in claim 4 or 5, **characterized in that** the linear drive elements (8.1 - 8.8) are regulated individually by the controller (9) to a predefined clamping force during the joining process.

7. The method as claimed in claim 6, **characterized in that** the predefined clamping force of the individual linear drive elements is adjusted in such a way that all linear drive elements simultaneously reach an individual switch-off criterion applying to them.

8. The method as claimed in one of claims 4 to 6, **characterized in that** during the joining process, the linear drive element (8.1 - 8.8) applying the highest clamping force specifies, with its joining displacement, the joining displacement of the further linear drive elements (8.1 - 8.8) directly or by means of a setpoint variation as a command variable.

9. The method as claimed in one of claims 4 to 8, **characterized in that** during the joining process, the driving of the linear drive elements (8.1 - 8.8) starting from the reference position is carried out according to the geometrical data, available in the controller (9), of the object to be produced from the components (2, 4) to be joined.

10. The method as claimed in one of claims 4 to 9, **characterized in that** the target criterion for ending the feeding of the components (2, 4) by the linear drive elements (8.1 - 8.8) is the reaching of a predefined feed displacement.

11. The method as claimed in one of claims 4 to 9, **characterized in that** the target criterion for ending the feeding of the components (2, 4) by the linear drive elements (8.1 - 8.8) is the reaching of a defined limiting force, which is higher than the clamping force during the feed process.

## Revendications

1. Dispositif d'assemblage, en particulier de soudage au laser, de deux éléments de construction, en particulier des éléments de construction en matière plastique, comprenant
- deux logements de pièces à usiner (1, 3) pour le maintien respectif des deux éléments de construction (2, 4) à assembler,
- respectivement un élément de palier, de préférence une plaque de palier (7), pour chacun des logements de pièces à usiner (1, 3),
- un entraînement de serrage (SA) pour au moins un élément de palier pour l'approche et le serrage des deux éléments de construction (2, 4) maintenus dans les logements de pièces à usiner (1, 3) pendant le processus d'assemblage,
- une commande (9) pour l'entraînement de serrage (SA) et en particulier un dispositif de soudage au laser (LS), ainsi qu'
- un couplage mécanique lâche entre l'entraînement de serrage (SA) et l'élément de palier (7) de telle sorte que les deux logements de pièces à usiner (1, 3) peuvent être basculés l'un par rapport à l'autre pendant l'approche et le serrage,
l'entraînement de serrage (SA) présentant une pluralité d'éléments d'entraînement linéaires, en particulier des servocommandes linéaires (8.1 - 8.8), disposés et agissant parallèlement dans la direction d'approche (Z), sur lesquels l'élément de palier, réalisé sous forme de plaque de palier (7), de l'un des logements de pièces à usiner (1, 3) est logé de manière flottante,
**caractérisé en ce que** les éléments d'entraînement linéaires (8.1 - 8.8) présentent une détection de position et/ou une détection de force d'entraînement.

2. Dispositif selon la revendication 1, **caractérisé en ce que** le couplage entre l'entraînement de serrage (SA) et l'élément de palier (7) est un palier flottant.

3. Dispositif selon la revendication 1 ou 2, **caractérisé en ce que** les éléments d'entraînement linéaires (8.1 - 8.8) peuvent être commandés individuellement par la commande (9) en fonction des valeurs saisies par la détection de position et/ou de force d'entraînement.

4. Procédé de fonctionnement d'un dispositif d'assemblage selon l'une quelconque des revendications 1 à 3 lors d'un processus d'assemblage de deux éléments de construction (2, 4) maintenus dans les logements de pièces à usiner (1, 3), en particulier lors d'un processus de soudage au laser, comprenant les étapes de procédé suivantes :
- l'approche d'au moins l'un des éléments de palier (7) à l'aide des éléments d'entraînement linéaires (8.1 - 8.8) jusqu'au contact des deux éléments de construction (2, 4) à assembler selon une valeur de consigne prédéfinie du système, en particulier une valeur de consigne de la force de serrage (F_{CONSIGNE}) d'au moins l'un des éléments d'entraînement linéaires (8.1 - 8.8), les logements de pièces à usiner (1, 3) se réglant dans une position correspondante l'un par rapport à l'autre,
- définition de la position du contact comme position de référence,
- pendant le processus d'assemblage, en particulier le processus de soudage, une autre commande des éléments d'entraînement linéaires (8.1 - 8.8) à partir de la position de référence selon au moins un paramètre de système prédéfini, en particulier selon une force de serrage prédéfinie et/ou une course d'assemblage prédéfinie des éléments d'entraînement linéaires (8.1 - 8.8), jusqu'à ce qu'un critère cible soit atteint pour le paramètre de système, et
- fin du processus d'assemblage une fois le critère cible atteint.

5. Procédé selon la revendication 4, **caractérisé en ce que** pour chaque élément d'entraînement linéaire (8.1 - 8.8), des valeurs de consigne de force de serrage prédéfinies (F_{CONSIGNE}) identiques ou différentes sont utilisées comme valeur de consigne du système pour déterminer la position de référence.

6. Procédé selon la revendication 4 ou 5, **caractérisé en ce que** les éléments d'entraînement linéaires (8.1 - 8.8) sont réglés individuellement à une force de serrage prédéfinie par la commande (9) pendant le processus d'assemblage.

7. Procédé selon la revendication 6, **caractérisé en ce que** la force de serrage prédéfinie des différents éléments d'entraînement linéaires est réglée de telle sorte que tous les éléments d'entraînement linéaires atteignent simultanément un critère de coupure individuel qui leur est applicable.

8. Procédé selon l'une quelconque des revendications 4 à 6, **caractérisé en ce que** pendant le processus d'assemblage, l'élément d'entraînement linéaire (8.1 - 8.8) appliquant la force de serrage la plus élevée prédéfinit avec sa course d'assemblage la course d'assemblage des autres éléments d'entraînement linéaires (8.1 - 8.8) directement ou par l'intermédiaire d'une variation de consigne en tant que grandeur de référence.

9. Procédé selon l'une quelconque des revendications 4 à 8, **caractérisé en ce que,** pendant le processus d'assemblage, la commande des éléments d'entraînement linéaire (8.1 - 8.8) s'effectue à partir de la position de référence en fonction des données de forme disponibles dans la commande (9) de l'objet à fabriquer à partir des éléments de construction (2, 4) à assembler.

10. Procédé selon l'une quelconque des revendications 4 à 9, **caractérisé en ce que** le critère cible pour la fin de l'approche des éléments de construction (2, 4) par les éléments d'entraînement linéaire (8.1 - 8.8) est l'atteinte d'une course d'approche prédéfinie.

11. Procédé selon l'une quelconque des revendications 4 à 9, **caractérisé en ce que** le critère cible pour la fin de l'approche des éléments de construction (2, 4) par les éléments d'entraînement linéaires (8.1 - 8.8) est l'atteinte d'une force limite définie, supérieure à la force de serrage pendant l'opération d'approche.
